# FASCICULE DE BREVET EUROPEEN

(11) **EP 3 635 485 B1**
(45) Date de publication et mention de la délivrance du brevet: **18.05.2022**
(21) Numéro de dépôt: 18748958.8
(22) Date de dépôt: 05.06.2018
(51) Int. Cl.: G03B 21/62

(54) **ECRAN DE PROJECTION DE COULEUR FONCEE OU NOIR**
DUNKEL GEFÄRBTER ODER SCHWARZER PROJEKTIONSSCHIRM
DARK-COLOURED OR BLACK PROJECTION SCREEN

(30) Priorité: 07.06.2017 FR 1755047
(43) Date de publication de la demande: 15.04.2020
(73) Titulaire: SAINT-GOBAIN GLASS FRANCE, 92400 Courbevoie (FR)
(72) Inventeur: OZANAM, C cile, 91300 Massy (FR); GAYOUT, Patrick, 93250 Villemomble (FR); MIMOUN, Emmanuel, 92100 Boulogne-Billancourt (FR)
(74) Mandataire: Saint-Gobain Recherche
(86) Numéro de dépôt international: PCT/FR2018/051296
(87) Numéro de publication internationale: WO 2018/224766

(56) Documents cités:
- WO-A1-2004/036310
- WO-A1-2011/012913
- WO-A1-2016/035227
- FR-A1- 2 971 060
- GB-A- 2 512 824

## Description

L'invention concerne un article de couleur foncée ou noir pouvant être utilisé comme écran de projection fonctionnant en réflexion. L'invention concerne également un système de projection et un procédé de projection utilisant ledit article.

Un écran de projection permet la visualisation d'une image sur une face de l'écran. L'image est issue d'un projecteur ou plus généralement d'une source lumineuse, positionnée en regard de ladite face de l'écran. Dans le cas de la projection, par opposition à la rétroprojection, la face sur laquelle est projetée l'image provenant de la source lumineuse est positionnée dans la même région de l'espace que la source lumineuse.

Pour qu'un article puisse être utilisé comme écran de projection, il faut qu'il réfléchisse de manière diffuse la lumière. De manière usuelle, la réflexion par un article est dite diffuse lorsqu'un rayonnement incident avec un angle d'incidence donné est réfléchi par l'article dans une pluralité de directions. Par opposition, la réflexion par un article est dite spéculaire lorsqu'un rayonnement incident avec un angle d'incidence donné est réfléchi par l'article avec un angle de réflexion égal à l'angle d'incidence. De manière analogue, la transmission à travers un article est dite spéculaire lorsqu'un rayonnement incident avec un angle d'incidence donné est transmis par l'article avec un angle de transmission égal à l'angle d'incidence.

Il existe aujourd'hui une forte demande pour des écrans de projection de couleur foncée ou noirs. Or, les supports foncés ou noirs constituent en général de mauvais écrans de projection car ils réfléchissent peu la lumière. L'intensité des images projetées est faible. La luminance du blanc d'une image projetée sur un support noir est trop faible pour obtenir un contraste satisfaisant.

Les mesures de la luminance du blanc et du noir permettent d'apprécier la qualité d'un article utilisé comme écran de projection. La luminance correspond à l'intensité lumineuse par unité de surface projetée orthogonalement sur un plan normal à la direction considérée (qui s'exprime en cd/m²). Ce paramètre correspond à la sensation visuelle de luminosité, causée par la réflexion ou l'émission de lumière par une surface.

Dans la présente demande, les valeurs de luminance sont mesurées avec un Luminancemètre Konica-Minolta^{®} LS-110. La projection d'image est réalisée avec un vidéoprojecteur Canon^{®} XEED SX80 (Luminosité, 3000 lumens, contraste 900:1). La disposition des éléments est la suivante. Le vidéoprojecteur est situé en face et à 1,5 m de l'article utilisé comme écran. La direction de projection est normale à l'écran. Les observateurs, le luminancemètre et éventuellement l'appareil photographique sont situés à 2 m de l'article.

Certains articles utilisés comme écran peuvent comporter une première surface plane située entre le projecteur et le premier élément diffusant. Cette surface plane peut donner lieu à de la réflexion spéculaire. Dans le cadre de la présente demande, lorsque l'on mesure la luminance, on exclut systématiquement la réflexion spéculaire qui ne présente pas d'intérêt pour l'application visée. Par conséquent, lorsque la luminance doit être mesurée dans une direction confondue avec la direction de réflexion spéculaire, les mesures de luminance sont réalisées avec une variation d'angle de 3 ° par rapport à la direction de réflexion spéculaire pour s'affranchir de cette réflexion spéculaire.

La direction de réflexion spéculaire est définie par la direction de projection et la normale à l'écran. Dans la configuration décrite ci-dessus, la direction de projection est alignée avec la normale à l'écran. La direction de réflexion spéculaire est donc aussi la normale à l'écran.

Sauf indications contraires, les mesures de luminance sont faites dans un environnement éclairé à 350 LUX avec un angle de 3° par rapport à la direction de la réflexion spéculaire correspondant à la normale à l'écran pour exclure la réflexion spéculaire.

On connait des verres laqués décoratifs commercialisés, par exemple, par Saint-Gobain sous les marques Planilaque^{®}, Decolaque^{®} ou Feeling^{®}. Ces vitrages sont constitués d'un substrat en verre sur lequel un revêtement opaque correspondant à une laque est appliqué en face arrière. Selon l'invention, on entend par « laque » un revêtement opaque, coloré, blanc ou noir. Les verres laqués noirs de ce type présentent notamment une luminance du noir inférieure à 5 cd/m² et une luminance du blanc inférieure à 30 cd/m², notamment de l'ordre de 20 cd/m² dans un environnement éclairé à 350 LUX mesurée avec un angle de 3° par rapport à la direction de réflexion spéculaire sur la face avant.

L'utilisation de verres laqués de couleur foncée comme écran de projection n'est pas satisfaisante. Pour les raisons mentionnées ci-dessus, les propriétés optiques de ces verres laqués foncés ne sont pas compatibles avec la projection d'images.

De plus, ces verres laqués de couleur foncée, et plus particulièrement les substrats laqués noirs, ont pour inconvénients de rendre les traces de doigts et salissures extrêmement visibles.

Les demandes WO 2012/104547 et WO 2013/175129 divulguent des vitrages transparents comprenant des éléments en couches à transmission spéculaire et réflexion diffuse utilisés comme écran de projection. Un élément en couches à transmission spéculaire et réflexion diffuse est un élément qui donne lieu à une transmission spéculaire et une réflexion diffuse d'un rayonnement incident sur l'élément. L'objectif visé dans ces demandes est de conserver la transparence pour garantir une vision nette à travers le vitrage. Des vitrages de ce type présentent une luminance du noir entre 5 et 17 cd/m² et une luminance du blanc entre 300 et 2300 cd/m² dans un environnement éclairé à 350 LUX mesurée avec un angle de 3° par rapport à la direction de réflexion spéculaire. Les demandes WO 2004/036310 A1, WO 2016/035227 A1 et GB 2 512 824 A traitent d'écran de projection.

Il existe un besoin de développer un article de couleur foncée ou noir permettant de projeter des images de bonne qualité avec une bonne luminosité et un bon contraste.

L'invention concerne un article utilisé comme écran de projection comprenant deux éléments diffusants à réflexion diffuse distincts, sous forme de plans ou de plaques parallèles, qualifiés de premier et second éléments diffusants, conformes à la revendication 1.

Le premier élément diffusant est translucide ou transparent.

Le second élément diffusant est de couleur foncée.

Selon l'invention, les éléments diffusants sous forme de plan ou de plaque sont des éléments comprenant deux surfaces principales séparées par des bords. Le terme « élément diffusant » englobe des substrats mais également des films et couches, même très minces, qui ne sont pas autoporteuses/autoporteurs mais nécessitent un substrat support.

Selon l'invention, les éléments diffusants sous forme de plan ou de plaque sont imperméables ou étanches, c'est à dire qui ne se laisse pas pénétrer par un fluide, notamment par l'air.

Selon un mode de réalisation préféré, le premier élément diffusant comprend une surface texturée. Dans ce mode de réalisation, c'est la texturation de surface qui génère la diffusion. La surface rugueuse correspond donc à un plan de diffusion. Dans ce cas, l'élément diffusant est sous forme de plan.

Selon l'invention, un élément « translucide » est un élément qui transmet la lumière de manière diffuse et un élément « transparent » est un élément qui transmet la lumière de manière spéculaire. Le premier élément diffusant présente une transmission lumineuse supérieure à 30 %, voire 50 % et une réflexion lumineuse supérieure à 4 %.

Selon l'invention, on entend par « élément diffusant à réflexion diffuse », un élément qui réfléchit la lumière dans toutes les directions. Lorsque la réflexion est quasi uniforme dans toutes les directions, on considère que la réflexion est homogène. Dans le cas idéal, on parle de réflexion Lambertienne. Lorsque la lumière est diffusée dans toutes les directions avec une direction privilégiée pour laquelle la réflexion est plus importante, on considère que la réflexion est non Lambertienne ou non homogène.

Les mesures de la luminance du blanc et du noir à différents angles d'observation permettent d'apprécier si la diffusion par une surface est homogène ou non homogène.

Selon l'invention, on considère que la diffusion ou réflexion diffuse est homogène si les variations maximales de gain normalisé en fonction de l'angle d'observation, en valeurs absolues, mesurées entre 0° et 60° par rapport à la normale à l'écran, sont inférieures à 0,15, voire inférieures à 0,10, de préférence inférieure à 0,05.

Selon l'invention, on considère que la diffusion ou réflexion diffuse est non homogène si les variations maximales de gain normalisé en fonction de l'angle d'observation, mesurées entre 0° et 60° par rapport à la normale à l'écran sont :
- en valeurs absolues, supérieures à 0,2, voire supérieures à 0,5, voire supérieures à 1, voire supérieures à 5,
   et
- en pourcentages, supérieures à 30%, voire supérieures à 50 %, de préférence supérieures à 80 %, voire supérieures à 90 %.

Le gain normalisé est déterminé de la façon suivante :
G = (Lbx°- Lnx°)/(Lbrefx° - Lnrefx°) avec
Lbx° : Luminance du blanc,
Lnx° : Luminance du noir,
Lbrefx° : Luminance du blanc d'un diffuseur lambertien de référence,
Lnrefx° : Luminance du noir d'un diffuseur lambertien de référence.

Ces valeurs de luminances sont toutes mesurées aux mêmes angles d'observation correspondant à x° par rapport à la normale à l'écran.

Un diffuseur idéal ou Lambertien est parfaitement réfléchissant en tout point de sa surface et possède un gain constant quel que soit l'angle d'observation.

La variation maximale de gain normalisé est déterminée de la façon suivante :
- en valeur absolue : ΔG=|Gₘₐₓ₋Gₘᵢₙ|,
- en pourcentage: ΔG=|Gₘₐₓ-Gₘᵢₙ|/Gₘₐₓ*100,
avec
Gmax : Gain normalisé maximal mesuré entre 0 et 60° par rapport à la normale à l'écran,
Gmin : Gain normalisé minimal entre 0 et 60° par rapport à la normale à l'écran.

De préférence, le premier élément diffusant présente une réflexion diffuse non homogène, c'est-à-dire qu'il ne réfléchit pas le rayonnement de manière uniforme dans toutes les directions. Le second élément diffusant présente une réflexion diffuse homogène, c'est-à-dire qu'il réfléchit le rayonnement de manière uniforme dans toutes les directions.

Lorsque l'article est utilisé comme écran de projection, les images sont projetées du côté du premier élément diffusant. L'image se forme donc sur la « surface » réfléchissante du premier élément diffusant.

Lorsque le premier élément diffusant présente une réflexion diffuse non homogène, l'article l'incorporant présente également une réflexion diffuse non homogène mesurée du côté de ce premier élément diffusant.

Avantageusement, l'article présente des variations maximales de gain normalisé en fonction de l'angle d'observation, mesurées du côté du premier élément diffusant, entre 0° et 60° par rapport à la normale à l'écran :
- en valeurs absolues, supérieures à 0,2, voire supérieures à 0,5, voire supérieures à 1, voire supérieures à 5,
   et
- en pourcentages, supérieures à 30%, voire supérieures à 50 %, de préférence supérieures à 80 %, voire supérieures à 90 %.

Cela signifie que les valeurs de luminance, notamment la luminance du blanc, varient selon l'angle d'observation. Cela signifie également qu'il existe une direction pour laquelle la réflexion diffuse est maximale. Cette direction est qualifiée de direction de diffusion privilégiée.

Selon certains modes de réalisation, l'article peut comporter une première surface plane située entre le projecteur et le premier élément diffusant. Cette surface plane peut donner lieu à de la réflexion spéculaire. Cette réflexion spéculaire doit être exclue pour déterminer la direction de diffusion privilégiée. Lorsque la direction de diffusion privilégiée se trouve confondue avec la direction de réflexion spéculaire, les mesures de luminance sont réalisées avec une variation d'angle de 3 ° pour s'affranchir de cette réflexion spéculaire.

La direction de diffusion privilégiée peut être déterminée soit par des mesures de luminance en excluant la réflexion spéculaire.

La direction de diffusion privilégiée peut également avantageusement être déterminée grâce au profil de réflexion diffuse résultant de la mesure de la BRDF ("Bidirectional Reflectance Distribution Function" en anglais). Cette mesure permet d'isoler la réflexion spéculaire et la réflexion diffuse. La BRDF est permet de caractériser l'intensité de la lumière diffusée par une surface lorsque celle-ci est éclairée. La BRDF donne la quantité de lumière diffusée en fonction de la direction d'observation, de l'angle d'incidence de l'éclairage, de la longueur d'onde et de la polarisation.

La réflexion diffuse de l'article, mesurée du côté du premier élément diffusant, peut être maximale dans la direction de réflexion spéculaire. Dans ce cas, l'article utilisé comme écran renvoie plus de lumière aux petits angles qu'aux grands angles.

La réflexion lumineuse diffuse du premier élément diffusant ou de l'article, mesurée du côté du premier élément diffusant, peut également avoir au moins un maximum dans une direction distincte de la direction de réflexion spéculaire. L'angle de diffusion maximale est dans ce cas différent de l'angle de diffusion spéculaire.

Les valeurs de luminance dans la direction de diffusion privilégiée, le spéculaire étant exclu, sont mesurées selon les critères suivants :
- mesure dans la direction de diffusion privilégiée lorsque la direction de diffusion privilégiée et la direction de réflexion spéculaire ne sont pas confondues ou
- mesure dans la direction de diffusion privilégiée corrigée de 3 ° lorsque la direction de diffusion privilégiée et la direction de réflexion spéculaire sont confondues.

Lorsque les caractéristiques optiques telles que la transmission lumineuse TL, la réflexion lumineuse RL, la luminance, les coordonnées L*, a*, b*, sont mesurées pour l'article « du côté du premier élément » cela signifie que ces mesures sont réalisées avec un rayonnement en incidence normale (sauf indication contraire) qui traverse l'article en allant du premier élément diffusant vers le second élément diffusant. Le côté du premier élément diffusant correspond à la face de l'article séparée de second élément diffusant par le premier élément diffusant.

La coopération synergique entre l'élément diffusant de couleur foncée ou noir et l'élément diffusant transparent ou translucide permet l'obtention d'une image projetée avec une excellente luminosité et un excellent contraste tout en conservant, pour l'article, un aspect visuel de couleur foncée ou noir.

La solution de l'invention permet notamment d'obtenir des valeurs de luminance du blanc élevées notamment supérieures à 100 cd/m², voire supérieure à 1000 cd/m² et des valeurs de luminance du noir inférieure à 30 cd/m², valeurs mesurées dans la direction de diffusion privilégiée, le spéculaire étant exclu. Les valeurs de luminance du blanc sont notamment aussi élevées que celles obtenues avec un substrat de verre laqué blanc. Les valeurs de luminance du noir restent extrêmement faibles. L'article selon l'invention présente donc les propriétés avantageuses de faible luminance du noir sans les inconvénients des faibles luminances du blanc des verres laqués noirs.

L'invention fournit un article utilisable comme écran de projection présentant :
- une luminance du blanc des images projetées suffisamment élevée pour permettre leur bonne visualisation,
- une bonne résolution des images projetées,
- un rendu des couleurs très bon.

Un autre avantage considérable de l'article selon l'invention concerne la réduction de la visibilité de traces et salissures. De manière surprenante, bien que l'article soit de couleur foncée ou noir, la visibilité des traces et salissures, telles que les traces de doigts est sensiblement réduite, et ce notamment lorsqu'il est éclairé. Si on compare un article selon l'invention comprenant un premier élément diffusant transparent ou translucide et un second élément diffusant de couleur foncée ou noir à un article comprenant uniquement un élément diffusant de couleur foncée ou noir, par exemple un substrat laqué noir comprenant deux faces principales lisses, le contraste mesuré sur une trace de doigts est bien plus faible avec l'article selon l'invention qu'avec l'autre article correspondant au substrat laqué noir seul.

L'article selon l'invention présente également les caractéristiques nécessaires pour être utilisé comme tableau effaçable, tel qu'un tableau noir.

La couleur foncée de l'article observée du côté du premier élément diffusant correspond à la perception de la couleur foncée du second élément diffusant vu au travers du premier élément diffusant.

Le second élément diffusant de couleur foncée présente une luminance du noir, par ordre de préférence croissant, inférieure à 30 cd/m², de préférence inférieure à 20 cd/m², inférieure à 10 cd/m².

Le second élément diffusant présente une surface de réflexion homogène. Le gain normalisé ne varie pas en fonction de l'angle d'observation.

En revanche, dans la mesure où le premier élément diffusant présente de préférence une réflexion non homogène, les valeurs de luminance de l'article mesurées du côté du premier élément diffusant ne sont pas les mêmes selon l'angle d'observation.

L'article présente une luminance du noir, par ordre de préférence croissant, inférieure à 30 cd/m², inférieure à 20 cd/m², inférieure à 10 cd/m², inférieure à 8 cd/m² mesurée dans un environnement éclairé à 350 LUX selon la direction de diffusion privilégiée, le spéculaire étant exclu, du côté du premier élément diffusant.

L'article présente une luminance du blanc, par ordre de préférence croissant, supérieure à 50 cd/m², supérieure à 60 cd/m², supérieure à 80 cd/m², supérieure à 100 cd/m², supérieure à 200 cd/m², supérieure à 500 cd/m², supérieure à 1000 cd/m², mesurée dans un environnement éclairé à 350 LUX selon la direction de diffusion privilégiée, le spéculaire étant exclu, du côté du premier élément diffusant.

Le contraste correspond au rapport de la luminance du blanc sur la luminance du noir. Les valeurs de luminance sont mesurées comme expliqué ci-dessus, dans la direction de diffusion privilégiée, à plus ou moins 3° pour exclure éventuellement la réflexion spéculaire.

De préférence, l'article selon l'invention présente un contraste, par ordre de préférence croissant, supérieur à 30, supérieur à 50, supérieur à 60, supérieur à 80, supérieur à 100, supérieur à 200.

La couleur peut également être évaluée grâce aux coordonnées colorimétriques L*, a* et b* calculées en prenant en compte l'illuminant D65 et l'observateur de référence CIE-1931. La composante L* définit la clarté, qui va de la valeur 0 pour le noir à la valeur 100 pour le blanc. Selon l'invention, on entend par « couleur foncée », tout élément présentant une clarté telle que la valeur L* mesurée en réflexion, est inférieure à 50.

Le second élément diffusant de couleur foncé présente une clarté telle que la valeur L*, mesurée en réflexion est, par ordre de préférence croissant, inférieure à 50, inférieure à 40, inférieure à 35, inférieure à 30.

L'article présente une clarté telle que la valeur L*, mesurée en réflexion du côté du premier élément diffusant est, par ordre de préférence croissant, inférieure à 60, inférieure à 50, inférieure à 45, inférieure à 40, inférieure à 35, inférieure à 30.

Selon le mode de réalisation où le premier élément diffusant élément est à réflexion diffuse non homogène, il est possible de moduler l'angle préférentiel de diffusion. Par exemple, lorsque l'élément diffusant est un élément présentant une surface texturée, il est possible de définir un l'angle préférentiel de diffusion en jouant sur la distribution des pentes des motifs de la surface texturée. Selon ce mode de réalisation, la réflexion diffuse est définie par une pluralité de directions de réflexion qui est centrée autour d'au moins une direction préférentielle qui peut être distincte de la direction de réflexion spéculaire. Ainsi, le ou chaque meilleur angle d'observation pour l'observateur, c'est-à-dire l'angle d'observation lui permettant d'observer une image projetée avec une luminosité maximale, est dissocié de la direction de réflexion spéculaire. Le risque d'éblouissement par réflexion spéculaire est donc diminué voire supprimé. De manière avantageuse, dans des situations où l'angle de vue est faible, il est possible de concentrer le rayonnement réfléchi de manière diffuse par l'élément diffusant dans des directions privilégiées, en sélectionnant une texture appropriée pour la surface texturée de l'élément diffusant.

L'invention fournit donc également un article utilisable comme écran de projection présentant des angles de vue ajustables, compatibles avec un grand nombre de situations de projection existantes.

L'article selon l'invention peut présenter un angle de vue allant de 20° à 180°. Selon l'invention, l'angle de vue correspond à deux fois l'angle d'observation pour lequel le contraste passe en dessous de 4,5.

De préférence, le deuxième élément diffusant est un revêtement diffusant. Le revêtement diffusant est de couleur foncée ou noir. Le revêtement diffusant peut être déposé sur un substrat additionnel. Le substrat additionnel et le premier élément diffusant sont solidarisés par feuilletage à l'aide d'une feuille en matière plastique.

Dans certains modes de réalisation avantageux, le revêtement diffusant de couleur foncée ou noir est absorbant et/ou opaque. Les rayons transmis à travers le premier élément diffusant peuvent être majoritairement absorbés par le revêtement de couleur foncée ou noir. On prévient ainsi en grande partie les problèmes de dédoublement de l'image en éliminant ou atténuant la formation d'images parasites. Ce revêtement opaque concourt à l'obtention d'une meilleure définition de l'image projetée.

Le premier et le deuxième élément diffusant sont situés au contact, de préférence directement au contact, l'un de l'autre. Selon l'invention, le terme « au contact » signifie que les deux éléments ne sont pas séparés l'un de l'autre par une couche d'air ou de gaz. En revanche, « au contact » ne signifie pas que les deux éléments sont directement au contact l'un de l'autre.

L'article selon l'invention présente une transmission lumineuse, par ordre de préférence croissant, inférieure à 25 %, inférieure à 20 %, inférieure à 15 %, inférieure à 10 %, inférieure à 5 %, inférieure à 1 %, de 0 %.

L'article selon l'invention présente, par ordre de préférence croissant, une réflexion lumineuse, mesuré du côté du premier élément diffusant, supérieure à 1 %, supérieure à 4 %, supérieure à 5 %, supérieure à 10 %, supérieure à 20 %, supérieure à 30 %.

L'article selon l'invention apparait de couleur foncée ou noir lorsqu'il est observé du côté du premier élément diffusant. La présence du premier élément diffusant transparent ou translucide permet de voir au travers le second élément diffusant de couleur foncée ou noir. Cependant, l'aspect visuel de l'article ne correspond pas exactement à l'aspect visuel du second élément diffusant de couleur foncée ou noir. La présence du premier élément diffusant modifie partiellement l'aspect visuel du second élément diffusant de couleur foncée ou noir. Il lui confère notamment une apparence métallique ou un effet métallisé plus ou moins marqué, selon l'angle d'observation. Or, de tels effets métallisés sont recherchés pour des raisons esthétiques. L'article selon l'invention présente donc avantageusement un effet métallisé.

Le premier élément diffusant comprend au moins une surface texturée. Ce premier élément diffusant peut être choisi parmi un substrat texturé ou un élément en couches transparent à transmission spéculaire et réflexion diffuse. Dans chacun des cas, c'est la présence d'une surface texturée qui est à l'origine de la réflexion diffuse.

Le substrat texturé peut comprendre une couche réfléchissante déposée sur la surface texturée. Cette couche réfléchissante peut être déposée de manière conforme sur la surface texturée ou de telle sorte que le profil de texturation, notamment la distribution de pentes, demeure telle que définit ci-après. La couche réfléchissante peut correspondre exactement à la couche centrale définie ci-après et notamment comprendre une couche unique ou un empilement de couches.

Un élément en couches transparent à transmission spéculaire et réflexion diffuse comprend :
- deux couches externes transparentes (2, 4), ayant sensiblement le même indice de réfraction (n2, n4) et ayant chacune une surface principale externe lisse (2A, 4A), et
- une couche centrale (3) intercalée entre les couches externes (2, 4), la couche centrale (3) comportant au moins une couche transparente d'indice de réfraction (n3) différent de celui des couches externes ou une couche métallique,
où toutes les surfaces de contact (S₀, S₁, ..., Sₖ) entre deux couches adjacentes de l'élément en couches (1) où l'une des deux couches est une couche métallique, ou qui sont deux couches transparentes d'indices de réfraction différents, sont texturées et parallèles entre elles.

Une couche externe de l'élément en couches peut être formée par un substrat texturé choisi parmi les polymères, les verres ou les céramiques comprenant au moins une surface texturée.

La couche centrale de l'élément en couches peut être obtenue par dépôt par pulvérisation cathodique d'une couche unique ou d'un empilement de couches.

Dans la suite de cette description, on fait référence aux pentes de la texture de la surface texturé de l'élément diffusant. Il peut s'agit notamment des pentes de la texture de la surface texturé du substrat texturé ou de chaque surface de contact texturée de l'élément en couches qui est située entre deux couches adjacentes dont l'une est une couche transparente, notamment diélectrique, et l'autre est une couche métallique, ou entre deux couches adjacentes qui sont deux couches transparentes, notamment diélectriques, d'indices de réfraction différents. Dans la mesure où toutes les surfaces de contact texturées de l'élément en couches sont parallèles entre elles, il existe un unique profil de texture et une unique distribution des pentes valables pour toutes ces surfaces de contact texturées.

Les propriétés de réflexion diffuse de l'élément diffusant sont fonction du profil de texturation de la surface texturée. La nature de la texture et notamment la distribution des pentes conditionnent l'aspect de l'indicatrice de diffusion de l'article en réflexion. En jouant sur la forme de cette indicatrice de diffusion en réflexion, il est possible :
- d'obtenir des états intermédiaires entre réflexion spéculaire et réflexion parfaitement diffuse ou « idéale », où la lumière peut être dispersée de manière étroite ou large,
- d'obtenir une réflexion diffuse centrée autour d'au moins une direction préférentielle qui peut être distincte de la direction de réflexion spéculaire.

Selon un aspect de l'invention, la texture de la surface texturée du substrat texturé ou de chaque surface de contact entre deux couches adjacentes dont l'une est une couche transparente, notamment diélectrique, et l'autre est une couche métallique, ou qui sont deux couches transparentes, notamment diélectriques, d'indices de réfraction différents, est formée par une pluralité de motifs en creux ou en saillie par rapport à un plan général de la surface de contact.

Des éléments diffusant comprenant une surface texturée dont la distribution des pentes satisfait les caractéristiques exposées ci-après présentent une rétrodiffusion suffisante pour qu'une image se forme en projection directe. Ces éléments diffusants sont susceptibles :
- de présenter une réflexion diffuse maximum plus ou moins forte dans la direction de la réflexion spéculaire,
- de présenter une réflexion diffuse maximum dans une direction distincte de la direction de la réflexion spéculaire.

La pente quadratique moyenne Rdq du profil de la surface texturée, notamment du substrat texturé ou de chaque surface de contact, est strictement supérieure à 0,2°. De préférence, la pente quadratique moyenne Rdq du profil de la surface texturée est, par ordre de préférence croissant, comprise entre 0,5° et 40°, entre 1,0 et 30°, entre 2° et 20°, entre 2° et 10°. De préférence, la pente quadratique moyenne Rdq d'une surface lisse est inférieure à 0,2°. Dans le cadre de cette demande, la pente quadratique moyenne Rdq d'une surface est telle que définie dans la norme ISO 4287. et mesurée à l'aide d'un profilomètre MICROMESURE 2 de la société STIL, sur une surface de 1 mm x 1 mm avec un pas d'échantillonnage de 1 µm x 1 µm.

Les mesures de rugosité peuvent être réalisées à l'aide du profilomètre MICROMESURE 2 de la société STIL dans les conditions suivantes. La tête de mesure est constituée d'une lentille chromatique associée à un "magnifier" ayant les caractéristiques : ouverture numérique de 0,42 ; angle de mesure maximum de 25° ; résolution en Z de 0,04 microns ; résolution latérale de 4,5 microns. L'extraction du paramètre de rugosité qu'est la pente quadratique moyenne Rdq est réalisée avec un filtrage gaussien passe-bas ayant une longueur de coupure de 19 microns (qui filtre les microrugosités) et un filtrage gaussien passe-haut ayant une longueur de coupure de 1 mm (qui filtre les ondulations).

De plus, le choix de la texturation permet également de modifier l'aspect visuel ou la perception visuelle de l'article, notamment la couleur, l'intensité de la couleur et la présence d'effets métallisés. Le choix de la texturation peut également permettre d'obtenir un aspect visuel différent selon l'angle de vue.

Par exemple, deux articles selon l'invention diffèrent uniquement par le choix du premier élément diffusant. Le premier article comprend un premier élément diffusant à réflexion diffuse quasi homogène et le deuxième article comprend un premier élément diffusant à réflexion diffuse non homogène avec un maximum centré à 0°. Les deux articles comprennent le même second élément diffusant à diffusion homogène noir opaque. Vu de face, le premier article parait plus sombre que le deuxième article. La couleur du premier article semble homogène peu importe l'angle de vue. En revanche, la couleur du deuxième article à grand angle d'observation parait plus sombre qu'à la perpendiculaire et plus sombre que le premier article.

Indépendamment de la texture, la luminosité de l'image observée dépend de la nature de la couche centrale ou éventuellement de la couche réfléchissante. Il est possible d'adapter ses propriétés optiques notamment ses propriétés de réflexion en jouant sur le choix des matériaux et des épaisseurs.

Le second élément diffusant peut être un revêtement diffusant, de couleur foncée ou noir, notamment un revêtement opaque et absorbant choisi parmi les peintures minérales ou organiques et les émaux.

La peinture comprend principalement le mélange :
- d'une résine organique ou d'un liant minéral et
- de pigments organiques ou inorganiques.

L'émail est obtenu à partir de fritte de verre, de pigments inorganiques et d'une résine qui disparait lors du chauffage.

Le revêtement diffusant, de couleur foncée ou noir selon l'invention présente une épaisseur suffisante pour que la transmission lumineuse d'un substrat revêtu d'un tel revêtement soit inférieure à 1 %.

A titre d'exemple, le revêtement diffusant, de couleur foncée ou noir peut présenter une épaisseur supérieure à 10 µm ou comprise entre 10 µm et 500 µm, voire entre 20 et 100 µm.

Selon l'invention, un revêtement diffusant, de couleur foncée ou noir a une clarté telle que la valeur la valeur L*, mesurée en réflexion est, par ordre de préférence croissant, inférieure à 60, inférieure à 50, inférieure à 40, inférieure à 35, inférieure à 30.

Lorsque les caractéristiques optiques telles que TL, RL, L*, a*, b* sont mesurées pour le revêtement diffusant seul, ces mesures sont faites avec un rayonnement en incidence normale du côté de la face du revêtement diffusant destinée à être vue. Cette face correspond donc à celle qui sera visible à travers l'élément en couches une fois mis en œuvre dans l'article.

Selon un mode de réalisation, le premier élément diffusant est un élément en couches et le deuxième élément diffusant est un revêtement diffusant. L'élément en couches et le revêtement diffusant peuvent être assemblés par tous moyens connus.

Le revêtement diffusant peut être déposé directement sur une des surfaces principales externes lisse de l'élément en couches.

Le revêtement diffusant peut également être déposé sur un substrat additionnel, le substrat additionnel et le premier élément diffusant sont solidarisés par feuilletage à l'aide d'une feuille en matière plastique. Dans ce cas, le revêtement diffusant est déposé sur la face du substrat additionnel :
- la plus éloignée de l'élément en couches transparent ou
- la plus proche de l'élément en couches transparent.

Avantageusement, la feuille en matière plastique peut être une couche externe de l'élément en couches.

Lorsque le substrat comprenant le revêtement diffusant, de couleur foncée ou noir est feuilleté du côté du revêtement diffusant, le risque de voir apparaître une image parasite par réflexion d'une partie de la lumière incidente par le revêtement diffusant, est réduit notamment lorsque l'écran est observé avec un fort angle (angle rasant).

Toutefois, dans ce mode de réalisation, il peut être avantageux d'améliorer l'adhésion entre l'élément en couches et le revêtement diffusant. A cette fin, il est possible :
- d'utiliser une feuille en matière plastique en EVA et/ou
- d'appliquer une couche d'accrochage (primaire d'adhésion) incolore sur le revêtement diffusant, de couleur foncée ou noir.

Un article selon l'invention comprend dans cet ordre :
- un premier élément diffusant comprenant un élément en couches comprenant :
   - une couche externe choisie parmi les substrats texturé transparents, de préférence en verre rugueux,
   - une couche centrale déposée par pulvérisation cathodique,
   - une couche externe choisie parmi une feuille en matière plastique thermoformable ou sensible à la pression,
- un second élément diffusant comprenant un revêtement diffusant déposé sur un substrat additionnel.

L'élément en couche peut également être un film texturé feuilleté. Le film texturé comprend une couche déposée par pulvérisation magnétique déposée sur la surface texturée. Dans ce cas, un article selon l'invention comprend dans cet ordre :
- un premier élément diffusant comprenant un film texturé feuilleté,
- un second élément diffusant comprenant un revêtement diffusant, éventuellement déposé sur un substrat additionnel.

L'invention a également pour objet l'article utilisé comme écran de projection fonctionnant en réflexion. Dans ce cas, l'article comprend une face avant sur laquelle est projetée l'image et une face arrière. Le second élément diffusant est séparé de la face avant au moins par le premier élément diffusant.

Un écran de projection fonctionnant en réflexion signifie que les spectateurs et le projecteur sont situés du même côté de l'article.

L'invention a également pour objet un système de projection comprenant un article selon l'invention utilisé comme écran de projection et un projecteur, l'article comprenant une face avant sur laquelle est projetée l'image et une face arrière caractérisé en ce que le second élément diffusant est séparé de la face avant au moins par le premier élément diffusant.

L'invention a également pour objet un procédé de projection en réflexion selon lequel on dispose d'un écran de projection fonctionnant en réflexion et d'un projecteur, ledit procédé consistant à projeter grâce au projecteur des images sur l'écran de projection, ledit écran de projection comprenant un article selon l'invention.

A défaut de stipulation spécifique, les expressions « déposé sur » ne signifient pas nécessairement que deux éléments, couches, revêtements et/ou systèmes sont disposés au contact l'un de l'autre.

L'article selon l'invention de couleur foncée ou noir convient tout particulièrement comme écran de projection pour des salles de réunion ou de classe. L'article peut également être utilisé dans une crédence de cuisine.

Dans tous ces cas, il est facile de combiner la fonctionnalité écran de projection et celle de tableau noir. Il est en effet possible d'écrire sur l'article, comme sur tout substrat de verre, avec des marqueurs adaptés notamment des marqueurs blancs ou à base de craies liquides facilement effaçables.

La partie ci-après décrit plus en détail l'élément en couches.

On entend par matériau ou couche diélectrique un matériau ou une couche de conductivité électrique faible, inférieure à 100 S/m.

Un matériau ou couche diélectrique est un matériau ou une couche non métallique. Un matériau diélectrique peut être de nature organique ou minérale. Les matériaux ou couches diélectriques minérales peuvent être choisis parmi les oxydes, nitrures ou halogénures d'un ou plusieurs métaux de transition, non-métaux ou métaux alcalino-terreux. Les métaux de transition, non-métaux ou métaux alcalino-terreux sont choisis de préférence parmi le silicium, le titane, l'étain, le zinc, l'indium, l'aluminium, le molybdène, le niobium, le zirconium, le magnésium. Les matériaux ou couches diélectriques organiques sont choisis parmi les polymères.

Chaque couche externe de l'élément en couches peut être formée par un empilement de couches, pour autant que les différentes couches constitutives de la couche externe soient constituées en des matériaux transparents, notamment diélectriques, ayant tous sensiblement le même indice de réfraction.

La couche centrale de l'élément en couches peut être formée par une couche unique qui est une couche transparente, notamment diélectrique, d'indice de réfraction différent de celui des couches externes ou une couche métallique. En variante, la couche centrale de l'élément en couches peut être formée par un empilement de couches qui comprend au moins une couche transparente, notamment diélectrique, d'indice de réfraction différent de celui des couches externes ou une couche métallique.

Pour l'élément en couches, on distingue :
- d'une part, les couches métalliques, pour lesquelles la valeur de l'indice de réfraction est indifférente, et
- d'autre part, les couches transparentes, notamment diélectriques, pour lesquelles la différence d'indice de réfraction par rapport à celui des couches externes est à considérer.

De manière avantageuse, pour obtenir les propriétés de réflexion diffuse et transmission spéculaire de l'élément en couches, toutes les surfaces de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, sont texturées et parallèles entre elles.

La réflexion diffuse de chaque côté de l'élément en couches provient de ce que chaque surface de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, est texturée. Ainsi, lorsqu'un rayonnement incident sur l'élément en couches, de l'un ou l'autre côté de celui-ci, atteint une telle surface de contact, il est réfléchi par la couche métallique ou du fait de la différence d'indice de réfraction entre les deux couches transparentes et, comme la surface de contact est texturée, la réflexion est diffuse.

La transmission spéculaire à travers l'élément en couches provient quant à elle de ce que les deux couches externes ont des surfaces principales externes lisses et sont constituées en des matériaux ayant sensiblement le même indice de réfraction, et de ce que toutes les surfaces de contact entre deux couches adjacentes de l'élément en couches dont l'une est une couche transparente, notamment diélectrique, et l'autre est une couche métallique, ou qui sont deux couches transparentes, notamment diélectriques, d'indices de réfraction différents, sont texturées et parallèles entre elles.

Le terme « indice » fait référence à l'indice optique de réfraction, mesuré à la longueur d'onde de 550 nm.

Au sens de l'invention, deux matériaux transparents, notamment diélectriques, ont sensiblement le même indice de réfraction, ou ont leurs indices de réfraction sensiblement égaux, lorsque la valeur absolue de la différence entre leurs indices de réfraction à 550 nm est inférieure ou égale à 0,15. De préférence, la valeur absolue de la différence d'indice de réfraction à 550 nm entre les matériaux constitutifs des deux couches externes de l'élément en couches est inférieure à 0,05, encore de préférence inférieure à 0,015. Au sens de l'invention, deux couches transparentes, notamment diélectriques, ont des indices de réfraction différents lorsque la valeur absolue de la différence entre leurs indices de réfraction à 550 nm est strictement supérieure à 0,15.

Dans le cadre de l'invention, on utilise les définitions suivantes :
- Un élément transparent ou translucide est un élément à travers lequel il y a une transmission de rayonnement au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.
- Une surface lisse est une surface pour laquelle les irrégularités de surface sont de dimensions inférieures à la longueur d'onde du rayonnement incident sur la surface, de sorte que le rayonnement n'est pas dévié par ces irrégularités de surface. Le rayonnement incident est alors transmis et réfléchi de manière spéculaire par la surface.
- Une surface texturée est une surface pour laquelle les propriétés de surface varient à une échelle plus grande que la longueur d'onde du rayonnement incident sur la surface. Le rayonnement incident est alors transmis et réfléchi de manière diffuse par la surface.

L'élément en couches transparent permet d'obtenir une transmission spéculaire et une réflexion diffuse d'un rayonnement incident sur l'élément en couches du côté de l'une ou l'autre de ses couches externes. La couche centrale de l'élément en couches transparent favorise la réflexion diffuse, ce qui permet la projection d'une image sur l'un quelconque des côtés de l'élément en couches transparent, l'image se formant au niveau de la couche centrale.

Le parallélisme des surfaces de contact texturées de l'élément en couches transparent implique que, pour la ou chaque couche de la couche centrale qui est encadrée par des couches de nature, métallique ou non métallique, différente de la sienne ou d'indices de réfraction différents du sien, l'épaisseur de la couche est uniforme perpendiculairement à ses surfaces de contact avec les couches adjacentes. Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, en particulier par pulvérisation cathodique assistée par un champ magnétique (pulvérisation cathodique magnétron), où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

De manière avantageuse, afin d'obtenir le parallélisme des surfaces de contact texturées à l'intérieur de l'élément en couches transparent, la ou chaque couche constitutive de la couche centrale est une couche déposée par pulvérisation cathodique. En effet, la pulvérisation cathodique, en particulier la pulvérisation cathodique assistée par un champ magnétique (pulvérisation cathodique magnétron), garantit que les surfaces délimitant la couche sont parallèles entre elles, ce qui n'est pas le cas d'autres techniques de dépôt telles que l'évaporation ou le dépôt chimique en phase vapeur (CVD), ou encore le procédé sol-gel. Or, le parallélisme des surfaces de contact texturées à l'intérieur de l'élément en couches est essentiel pour obtenir une transmission spéculaire à travers l'élément.

Selon un aspect de l'invention, la couche centrale de l'élément en couches transparent comprend au moins une couche mince constituée en un matériau diélectrique à haut indice de réfraction, différent de l'indice de réfraction des couches externes, tel que Si₃N₄, SnO₂, ZnO, AIN, NbO, NbN, TiO₂, ou constituée en un matériau diélectrique à bas indice de réfraction, différent de l'indice de réfraction des couches externes, tel que SiO₂, Al₂O₃, MgF₂, AlF₃. La couche centrale peut également comprendre au moins une couche mince métallique, notamment une couche mince d'argent, d'or, de titane, de niobium, de silicium, d'aluminium, d'alliage nickel-chrome (NiCr), d'acier inoxydable, ou de leurs alliages. Au sens de l'invention, une couche mince est une couche d'épaisseur inférieure à 1 micromètre.

Dans un mode de réalisation de l'invention, l'une des deux couches externes de l'élément en couches transparent est une couche externe texturée comprenant un substrat rigide ou flexible, notamment en verre ou en matériau organique polymérique, dont une surface principale est texturée.

Dans un mode de réalisation de l'invention, le premier élément diffusant comprend un substrat texturé comprenant un substrat rigide ou flexible, notamment en verre ou en matériau organique polymérique, dont une surface principale est texturée.

La texturation de l'une des surfaces principales du substrat peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat, ou encore par impression 3D, préférentiellement à partir d'une texture générée informatiquement.

Dans le cas d'une couche externe texturée ou d'un substrat texturé formé par un substrat texturé en verre minéral, le verre est de préférence de type silico-sodo-calcique, mais selon des variantes il peut être en verre de type borosilicate, alumino-borosilicate, etc.

Dans le cas d'une couche externe texturée ou d'un substrat texturé formé par un substrat texturé en matériau organique polymérique, des exemples de matériaux appropriés comprennent, notamment, les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; les polycarbonates ; les polyuréthanes ; les polyamides ; les polyimides ; les polymères fluorés tels que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ; les résines photoréticulables et/ou photopolymérisables, telles que les résines thiolène, polyuréthane, uréthane-acrylate, polyester-acrylate ; les polythiouréthanes. Ces polymères présentent en général une gamme d'indice de réfraction à 550 nm allant de 1,30 à 1,70. Toutefois, il est intéressant de noter que certains de ces polymères, et notamment les polymères comprenant du soufre tels que les polythiouréthanes, peuvent présenter des indices de réfraction à 550 nm élevés pouvant aller jusqu'à 1,74.

Dans un autre mode de réalisation de l'invention, le substrat texturé ou l'une des deux couches externes de l'élément en couches transparent est une couche externe texturée formée par une couche conformable, dont une surface principale est texturée et qui est rapportée par son autre surface principale sur un substrat rigide ou flexible. Il peut s'agir notamment d'une couche thermoformable ou d'une couche en matériau photoréticulable et/ou photopolymérisable. Dans ce cas, un procédé bien approprié pour la texturation de l'une des surfaces principales de la couche conformable est, notamment, l'embossage. De préférence, le matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/ comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

Lorsque l'une des deux couches externes de l'élément en couches transparent est une couche externe texturée ayant une surface principale texturée et son autre surface principale lisse, la couche centrale est avantageusement formée :
- soit par une couche unique en matériau métallique ou en matériau transparent, notamment diélectrique, d'indice de réfraction différent de celui de la couche externe texturée, déposée de manière conforme sur la surface principale texturée de la couche externe texturée,
- soit par un empilement de couches, qui comprend au moins une couche en matériau métallique ou en matériau transparent, notamment diélectrique, d'indice de réfraction différent de celui de la couche externe texturée, déposées successivement de manière conforme sur la surface principale texturée de la couche externe texturée.

Selon l'invention, on considère que le dépôt de la couche centrale, ou le dépôt successif des couches de la couche centrale, sur la surface principale texturée de la couche externe texturée est réalisé de manière conforme si, suite au dépôt, la surface de la ou chaque couche de la couche centrale est texturée et parallèle à la surface principale texturée de la couche externe texturée. Selon une caractéristique avantageuse, le dépôt de la couche centrale de manière conforme, ou des couches de la couche centrale successivement de manière conforme, sur la surface principale texturée de la couche externe texturée est réalisé par pulvérisation cathodique, notamment assistée par un champ magnétique (pulvérisation cathodique magnétron). D'autres techniques de dépôt conforme sont également envisageables, telles que des techniques d'évaporation, en particulier pour le dépôt de couches métalliques.

Selon un aspect de l'invention, l'autre couche externe de l'élément en couches transparent, c'est-à-dire la couche externe située de l'autre côté de la couche centrale par rapport à la couche externe texturée, comprend une couche de matériau durcissable d'indice de réfraction sensiblement égal à celui de la couche externe texturée, déposée sur la surface principale texturée de la couche centrale opposée à la couche externe texturée en étant initialement dans un état visqueux, liquide ou pâteux adapté à des opérations de mise en forme.

La couche déposée initialement dans un état visqueux, liquide ou pâteux peut être, en particulier, une couche de planarisation de la surface de l'élément en couches transparent. En variante, la couche déposée initialement dans un état visqueux, liquide ou pâteux peut être une couche assurant une solidarisation entre, d'une part, la couche externe texturée munie de la couche centrale et, d'autre part, un contre-substrat.

La couche déposée initialement dans un état visqueux, liquide ou pâteux peut être une couche de matériau photoréticulable et/ou photopolymérisable. De préférence, ce matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/comonomères/pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

En variante, la couche déposée initialement dans un état visqueux, liquide ou pâteux peut être une couche déposée par un procédé sol-gel, notamment une couche sol-gel comprenant une matrice hybride organique/inorganique à base de silice. Une telle couche sol-gel est particulièrement avantageuse car elle offre la possibilité d'ajuster avec précision la valeur de son indice de réfraction, de sorte qu'il soit le plus proche possible de celui de la couche externe texturée. Selon l'invention, l'accord d'indice ou écart d'indice entre les deux couches externes de l'élément en couches transparent correspond à la valeur absolue de la différence entre les indices de réfraction à 550 nm de leurs matériaux diélectriques constitutifs. Plus l'écart d'indice est faible, plus la vision à travers l'élément en couches est nette. En particulier, on obtient une excellente vision avec un accord d'indice inférieur ou égal à 0,050, de préférence inférieur ou égal à 0,030 et mieux inférieur ou égal à 0,015.

Selon un aspect de l'invention, au moins l'une des deux couches externes de l'élément en couches transparent est un feuillet intercalaire à base de matériau polymère, notamment thermoformable ou sensible à la pression, c'est-à-dire le type de feuillet qu'on utilise comme intercalaire dans les vitrages feuilletés. Il peut s'agir, en particulier, d'au moins un feuillet à base de polybutyral de vinyle (PVB), d'éthylène-acétate de vinyle (EVA), de polyuréthane (PU), de polyéthylène téréphtalate (PET), de polychlorure de vinyle (PVC). Cette couche à base de matériau polymère peut jouer le rôle d'un intercalaire de feuilletage qui peut être feuilleté ou calandré à un substrat en tant que couche additionnelle, par exemple un verre clair ou extra-clair.

Selon un aspect de l'invention, l'élément en couches transparent peut être un film flexible notamment un film texturé feuilleté. Un tel film flexible est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un article transparent, afin de conférer à cette surface des propriétés de réflexion diffuse, tout en maintenant des propriétés de transmission spéculaire à travers le vitrage. L'article sur lequel est rapporté l'élément en couches transparent sous forme de film flexible peut être un vitrage plan ou bombé.

Dans un mode de réalisation, l'article comprend en outre au moins une couche additionnelle positionnée contre l'élément en couches transparent, de préférence choisie parmi :
- les substrats transparents choisis parmi les polymères, les verres ou les céramiques comprenant deux surfaces principales lisses,
- les matériaux durcissables initialement dans un état visqueux, liquide ou pâteux adapté à des opérations de mise en forme, notamment une couche sol-gel,
- les feuillets intercalaires à base de matériau polymère, notamment thermoformables ou sensibles à la pression.

Un élément en couches selon l'invention comprend par exemple une couche externe à base d'un substrat texturé transparent tel qu'un verre satiné à l'acide. La couche centrale est formée soit par une couche unique déposée de manière conforme sur la surface principale texturée de la première couche externe, soit par un empilement de couches, déposées successivement de manière conforme sur la surface principale texturée de la première couche externe. Dans ce mode de réalisation, la couche centrale est déposée sur une couche externe comprenant un substrat déjà texturé ou pré-texturé. De préférence, la couche centrale est déposée par pulvérisation cathodique, notamment assistée par un champ magnétique. L'autre couche externe comprend :
- une couche à base de matériaux durcissables initialement dans un état visqueux, liquide ou pâteux adapté à des opérations de mise en forme ou
- une feuille en matière plastique thermoformable ou sensible à la pression.

Les surfaces principales externes lisses de l'élément en couches transparent peuvent être planes ou bombées. Les surfaces principales externes lisses de l'élément en couches sont de préférence parallèles entre elles, ce qui contribue à limiter la dispersion lumineuse pour un rayonnement traversant l'élément en couches.

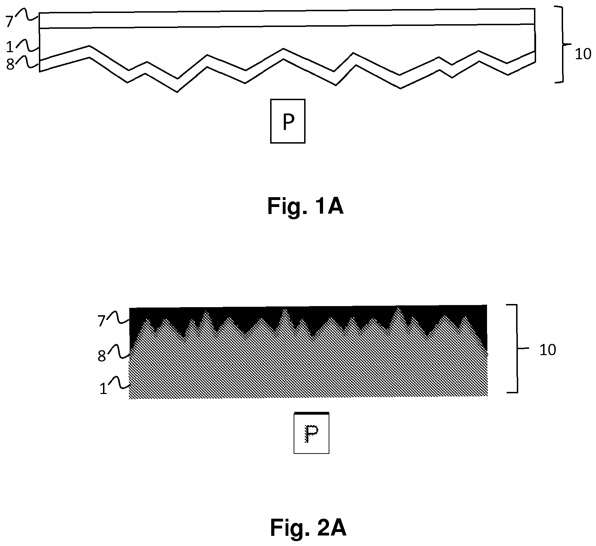

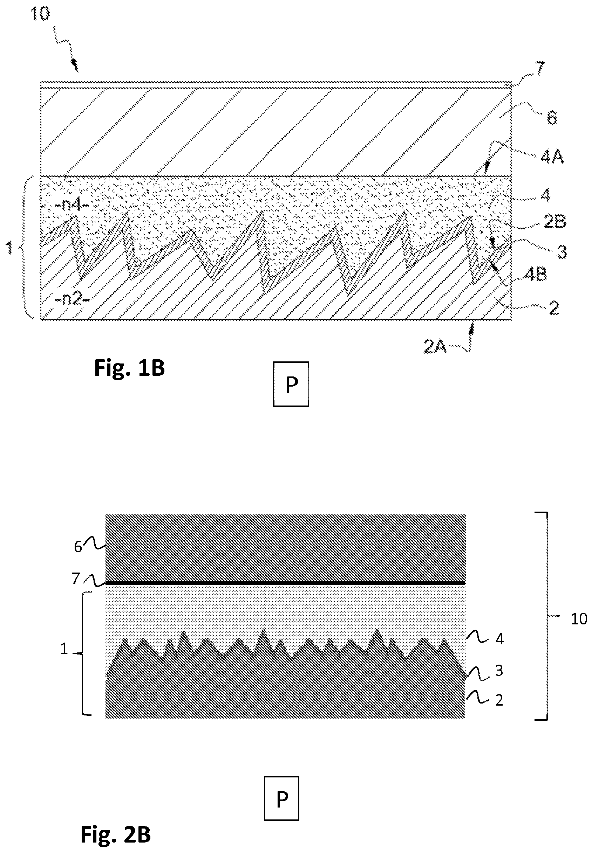

Les caractéristiques et avantages de l'invention apparaîtront dans la description qui va suivre de plusieurs modes de réalisation d'article selon l'invention, donnée uniquement à titre d'exemple et faite en se référant aux figures 1A et 1B annexées qui sont des coupes transversales schématiques d'un système de projection, comprenant un projecteur et d'un article selon l'invention.

Pour la clarté du dessin, les épaisseurs relatives des différentes couches n'ont pas été rigoureusement respectées. De plus, la possible variation d'épaisseur de la couche centrale lorsque le premier élément est un substrat texturé ou un élément en couches en fonction de la pente de la texture n'a pas été représentée sur ces figures, étant entendu que cette possible variation d'épaisseur n'impacte pas le parallélisme des surfaces de contact texturées. En effet, pour chaque pente donnée de la texture, les surfaces de contact texturées sont parallèles entre elles. Par ailleurs, on note que les surfaces de contact ne sont représentées que schématiquement, étant entendu que leur texture respecte le critère de distribution des pentes de l'invention.

Les figures 1A et 2A sont des coupes transversales schématiques d'un système de projection, comprenant un projecteur P et un article 10 comportant :
- un premier élément diffusant 1 comprenant un substrat texturé tel qu'un substrat de verre rugueux,
- éventuellement une couche mince 8 présentant une surface texturée,
- un second élément diffusant comprenant un revêtement diffusant 7.

Les figures 1B et 2B sont des coupes transversales schématiques d'un système de projection, comprenant un projecteur P et un article 10 comportant :
- un premier élément diffusant comprenant un élément en couches 1,
- un second élément diffusant comprenant un revêtement diffusant 7 déposé sur un substrat additionnel 6.

L'élément en couches 1, comporte deux couches externes 2 et 4 qui sont constituées en des matériaux diélectriques transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les textures des surfaces internes 2B et 4B sont complémentaires l'une de l'autre. Les surfaces texturées 2B et 4B sont positionnées en regard l'une de l'autre, dans une configuration où leurs textures sont strictement parallèles entre elles. L'élément en couches 1 comprend également une couche centrale 3, intercalée en contact entre les surfaces texturées 2B et 4B.

Lorsque la couche centrale 3 est une couche mince ou un empilement de couches minces, l'épaisseur de chaque couche de la couche centrale 3 est de l'ordre de, ou inférieure à, 1/10 de la hauteur moyenne des motifs de chaque surface de contact texturée de l'élément en couches.

Dans un exemple d'article 10 montré sur la figure 1B, la première couche externe 2 est un substrat texturé en verre clair ou extra-clair, et la deuxième couche externe 4 est formée par un feuillet intercalaire, par exemple en PVB, qui a sensiblement le même indice de réfraction que le substrat 2 et qui se conforme à la texture de la surface texturée de la couche centrale 3. Le feuillet intercalaire 4 est calandré par sa surface externe 4A à un substrat plan 6 en verre clair ou extra-clair, par exemple un verre de type SGG Planilux commercialisé par Saint-Gobain Glass, qui forme une couche ou additionnelle.

Selon un autre mode de réalisation, la première couche externe 2 n'est pas un verre texturé, mais un feuillet intercalaire, par exemple en PVB, qui a sensiblement le même indice de réfraction que le feuillet intercalaire 4. Dans ce deuxième exemple, la couche centrale 3 comprend un film flexible, par exemple un film de poly(méthacrylate de méthyle) (PMMA) ayant une épaisseur de l'ordre de 50 à 250 µm, sur lequel a été déposée une couche mince en matériau diélectrique ou en matériau métallique, par exemple une couche mince de TiO₂ ayant une épaisseur de l'ordre de 50 à 75 nm. L'ensemble du film flexible et de la couche mince est mis en forme d'ondulation ou d'accordéon pour créer la couche centrale texturée 3, qui est ensuite prise en sandwich entre les feuillets intercalaires 2 et 4, de telle sorte que les surfaces de contact entre les couches 2, 3 et 4 restent parallèles entre elles. Chacun des feuillets intercalaires 2, 4 peut être calandré par sa surface externe 2A, 4A à un substrat plan 5 (non représenté) ou 6 en verre clair ou extra-clair, par exemple un verre de type SGG Planilux commercialisé par Saint-Gobain Glass, qui forment des couches additionnelles.

La texture selon l'invention de chaque surface de contact texturée S₀, S₁, ..., Sₖ, est avantageusement obtenue par texturation d'une surface principale d'une première couche externe parmi les deux couches externes 2 et 4, notamment par embossage ou impression 3D, préférentiellement à partir d'une texture générée informatiquement, et dépôt de la couche centrale 3 de manière conforme sur la surface principale texturée de la première couche externe. On considère que la couche centrale 3 est déposée de manière conforme sur la surface principale texturée de la première couche externe si, suite au dépôt, la surface supérieure de la couche centrale 3 est texturée et parallèle à la surface principale texturée de la première couche externe. Le dépôt de la couche centrale 3 de manière conforme, ou le dépôt des couches constitutives de l'empilement de la couche centrale 3 de manière conforme, sur la surface principale texturée de la première couche externe est réalisé de préférence par pulvérisation cathodique, notamment assistée par champ magnétique. La couche mince 8 de la figure 1A peut correspondre à une couche centrale 3.

La deuxième couche externe parmi les deux couches externes 2 et 4 peut être formée en déposant, sur la surface principale texturée de la couche centrale 3 opposée à la première couche externe, une couche qui a sensiblement le même indice de réfraction que la première couche externe et qui se présente initialement dans un état visqueux adapté à des opérations de mise en forme. La deuxième couche externe peut ainsi être formée, par exemple, par un procédé comprenant le dépôt d'une couche de matériau photoréticulable et/ou photopolymérisable initialement sous forme fluide puis l'irradiation de cette couche, ou par un procédé sol-gel. En variante, la deuxième couche externe peut être formée en positionnant, contre la surface principale texturée de la couche centrale 3 opposée à la première couche externe, une couche à base de matériau polymère ayant sensiblement le même indice de réfraction que la première couche externe, puis en conformant cette couche à base de matériau polymère contre la surface principale texturée de la couche centrale 3 par compression et/ou chauffage au moins à la température de transition vitreuse du matériau polymère.

### Exemples

La transmission lumineuse TL et la réflexion lumineuse RL dans le visible en % sont mesurées selon la norme ISO 9050:2003 (illuminant D65 ; 2° Observateur) avec un rayonnement en incidence normale.

### I. Matériaux utilisés

### 1. Premier élément diffusant : Elément en couches

Ces essais ont été réalisés avec des éléments en couches tels que définis dans le tableau 1.

| **Tableau 1** | **Elément en couches 1** | **Elément en couches 2** | **Elément en couches 3** |
|---|---|---|---|
| **Matériaux** | | | |
| Première couche externe | Verre satiné 1 | Verre satiné 2 | Verre satiné 1 |
| Couche centrale | Couche de TiO2 | Couche de TiO2 | Couche de TiO2 |
| Deuxième couche externe | Feuille de PVB | Feuille de PVB | Feuille d'EVA |

| **Texturation** | | | |
|---|---|---|---|
| Rdq ° | 5,6 | 17,5 | 5,6 |

| **Diffusion en réflexion** | | | |
|---|---|---|---|
| Gain normalisé maximal | 8,8 | 1,4 | 8,8 |
| DRDM* | 0° | 0° | 0° |
| Angle de mesure de la luminance dans la DRDM** | 3 ° | 3 ° | 3 ° |
| Angle de vue | 125° | > 130° | 125° |

| | | | |
|---|---|---|---|
| * Direction de réflexion diffuse maximale par rapport à la normale à l'écran ** par rapport direction de réflexion diffuse maximum | | | |

Les verres satinés correspondent à des substrats texturés de verre également qualifiés substrats satinés de verre rugueux transparent. Ces substrats texturés de 4 mm d'épaisseur comprennent une surface principale texturée obtenue par attaque acide.

Les couches centrales sont des couches d'oxyde de titane de 60 nm déposée par pulvérisation cathodique assistée par champ magnétique (« dépôt magnétron ») de manière conforme sur la surface texturée des substrats texturés.

Les premiers éléments diffusants utilisés dans ces exemples sont tous des éléments diffusants à réflexion diffuse non homogène présentant une direction de diffusion privilégiée dans la direction spéculaire, c'est-à-dire un angle de diffusion maximal correspondant à la direction spéculaire. Par conséquent, la luminance maximale est dans chaque cas mesurée à un angle de 3° par rapport à la direction de réflexion spéculaire correspondant à la direction de diffusion privilégiée excluant le spéculaire.

### 2. Second élément diffusant : Revêtement diffusant noir

Le revêtement diffusant de couleur foncée ou noir est constitué par une laque noire. Ce revêtement noir est un revêtement opaque et absorbant. Il est déposé sur substrat de verre plan de type SGG PLANICLEAR^{®} de 4 mm d'épaisseur. L'ensemble forme un verre laqué noir commercialisés par la société Saint-Gobain sous la dénomination Planilaque^{®}.

Ce revêtement noir présente les propriétés suivantes :
- une transmission lumineuse TL inférieure à 5 %,
- une réflexion lumineuse RL d'environ 5 %,
- L* vaut environ 27, et a*, b* sont compris entre 0 et -1, mesurés en réflexion sur le côté du substrat opposé à celui sur lequel le revêtement a été déposé.

### 3. Articles

Les articles selon l'invention sont obtenus en feuilletant les éléments en couches avec un verre laqué noir. La deuxième couche externe en PVB ou EVA de l'élément en couches est utilisée comme intercalaire de feuilletage permettant d'assembler le verre laqué et l'élément en couches.

Pour les exemples Inv.1 et Inv.2, le revêtement diffusant de couleur foncée ou noir constitué par la laque est situé sur la face du substrat non au contact de la feuille de matière plastique en PVB.

Dans le cas d'un feuilletage côté revêtement diffusant, on utilise préférentiellement une feuille en matière plastique en EVA ou feuille en matière plastique en PVB associé à une couche d'accrochage pour des raisons de tenue mécanique. Pour les exemples Inv.3, Inv.4 et Inv.5, le revêtement de couleur foncée ou noir constitué par la laque est situé sur la face du substrat au contact de la feuille de PVB ou d'EVA.

| **Article* :** | Comp.1 | Comp.2 | Inv. 1 | Inv. 2 |
|---|---|---|---|---|
| Elément en couches | Non | 1 | 1 | 2 |
| Substrat en verre | Oui | Oui | Oui | Oui |
| Revêtement noir | Oui | Non | Oui | Oui |

| **Article*** : | Inv.3 | Inv.4 | Inv.5 |
|---|---|---|---|
| Elément en couches | 1 | 1 | 3 |
| Couche d'accrochage | - | Oui | - |
| Revêtement noir | Oui | Oui | Oui |
| Substrat en verre | Oui | Oui | Oui |

| | | | |
|---|---|---|---|
| * : Les différents éléments sont positionnés dans l'article selon l'ordre indiqué dans les tableaux ci-dessus. Par exemple, pour l'article Inv.1, l'élément en couches est au contact direct d'un substrat de verre lui-même au contact direct d'un revêtement noir. | | | |

### II. Appréciations visuelles et propriétés optiques

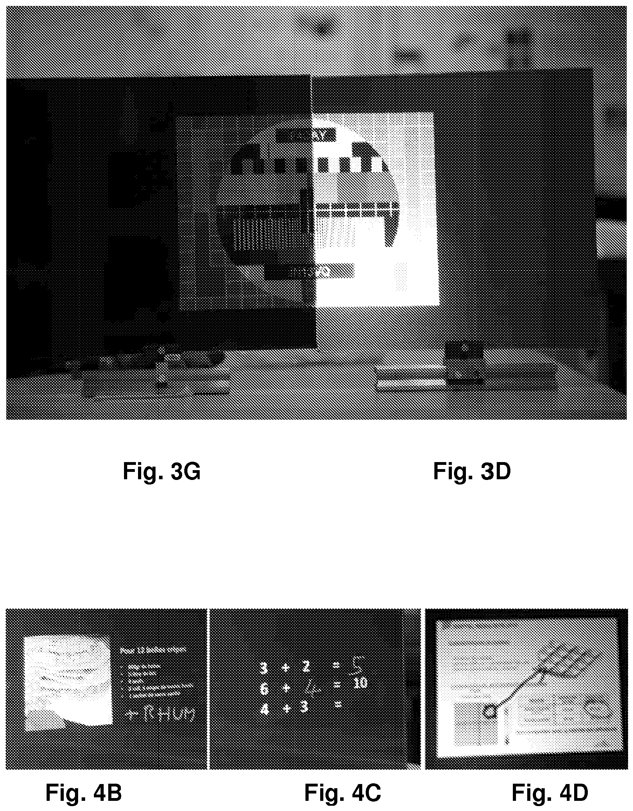

La figure 3 correspond à des photographies de l'article comparatif 1 et de l'article selon l'invention utilisés comme écran de projection.

La mesure des 350 Lux est réalisée avec un Luxmètre placé devant l'écran face au vidéoprojecteur éteint. Le plan principal de l'écran (plan de l'image) est vertical. Seuls des luminaires au plafond sont utilisés. Il n'y a pas de source d'éclairage directe dirigée vers la surface de l'écran.

La luminosité de l'image projetée sur l'article selon l'invention ainsi que son contraste (Inv.1, photographie 3D) sont fortement améliorés par rapport à une image projetée sur un verre laqué noir seul (Comp.1 ; photographie 3G).

Des observations visuelles afin de comparer l'intensité du noir côté de l'élément en couches ont été réalisés. Une note de 1 à 3 a été attribuée avec « 1 » qualifiant le noir le moins intense et « 3 » le noir le plus intense.

| **Exemple** | **Comp.1** | **Inv. 1** | **Inv. 2** |
|---|---|---|---|
| **Figure** | 3G | 3D | - |
| **Appréciation visuelle** | | | |
| Intensité du noir | | | |
| - De Face, 350 LUX | 3 | 1 | 1 |
| - A 45 °, 350 LUX | 3 | 2 | 1 |
| - De Face, 0,5 LUX | 3 | 3 | 3 |
| - A 45 °, 0,5 LUX | 3 | 3 | 3 |
| Aspect métallisé | Non | Oui | Oui |

Les rayons transmis sont majoritairement absorbés par la laque noire. Cependant, en projection, un dédoublement peu intense peut être visible mais uniquement aux grands angles d'observation, entre 75° et l'angle rasant. De ce fait, ce phénomène n'est pas gênant pour le spectateur.

De plus, il est possible de réduire ce phénomène en plaçant le revêtement diffusant de couleur foncée ou noir au plus près de la texture diffusante. A cet effet, l'article Inv. 3 diffère de Inv. 1 en ce que le verre laqué est feuilleté, non plus côté verre mais côté laque. Dans cette variante ainsi que dans les variantes Inv. 4 et Inv. 5, la laque se retrouve à l'intérieur de l'article au plus près de la texture diffusante. En conséquence, le dédoublement de l'image est réduit au minimum et devient quasiment invisible pour des conditions habituelles d'observation d'un écran.

D'un point de vue esthétique sans projection, l'aspect visuel de l'article est partiellement modifié par rapport à l'aspect visuel d'un revêtement de couleur foncée ou noir non superposé à un élément en couches.

Lorsque l'éclairage direct sur l'article est limité ou bien si la lumière diffusée par la texture ne l'est pas en direction de l'observateur, alors l'article parait de couleur proche de celle du revêtement de couleur foncée ou noir, notamment noir profond dans le cas du Planilaque^{®} noir.

Lorsqu'une lumière intense éclaire la surface de l'écran, celui-ci apparait gris foncé avec un aspect métallisé ou effet métallisé. L'ensemble de ces propriétés confère à l'article une esthétique qui s'apparente aux effets développés pour les peintures de carrosseries automobiles.

### III. Propriétés de l'écran

### 1. Analyse du contraste

Des mesures du contraste ont été réalisées afin de tester les écrans de projection de l'invention. Ces mesures ont été réalisées avec un éclairage artificiel dont l'éclairement moyen est de 350 lux. Le contraste est défini comme le rapport de la luminance mesurée quand le projecteur affiche une image blanche (luminance du blanc, I. b.) sur la luminance mesurée quand le projecteur affiche une image noire (luminance du noir, I. n.).

Le tableau ci-dessous donne les mesures des luminances et du contraste pour des verres laqués noirs seuls (Comp. 1), pour des éléments transparent à réflexion diffuse seul (Comp. 2) ainsi que pour l'article Inv.1.

| Article | Angle de mesure | LUX | I.b. | I.n. | Contraste | Commentaires |
|---|---|---|---|---|---|---|
| Comp. 1 | 3° | 350 | 21,3 | 2,5 | 8,5 | I.b. trop faible |
| Comp. 2 | 3° | 350 | 1440 | 11 | 137 | I.n. trop élevée |
| Inv.1 | 3° | 350 | 1380 | 7,7 | 179 | I.b. et I.n : ok |
| Comp. 1 | 45° | 350 | 16,2 | 0,63 | 25,7 | I.b. trop faible |
| Comp. 2 | 45° | 350 | 41 | 4,7 | 8,7 | I.n. trop élevée |
| Inv.1 | 45° | 350 | 42 | 1,7 | 24,7 | I.b. et I.n : ok |

Deux caractéristiques doivent être considérées pour rendre compte de la bonne qualité en termes d'intensité d'images projetées, une luminance du blanc, dans la direction de diffusion privilégiée, supérieure à 50 cd/m² et un contraste élevé.

L'invention permet d'obtenir un très bon contraste de l'image projetée, notamment lorsqu'elle est utilisée dans un environnement éclairé (lumière du jour ou/et artificielle). La luminance du blanc est très élevée alors que la luminance du noir reste faible. Par comparaison, un planilaque^{®} blanc sous un éclairage de 350 LUX a une Luminance du blanc de 1300 cd/m² et une luminance du noir d'environ 55 cd/m² à 0°. L'article selon l'invention à une luminance du blanc comparable à celle obtenue avec un verre laqué blanc de type planilaque^{®} et une luminance du noir sept fois inférieure.

Observé à 45 degrés, le contraste est du même ordre de grandeur pour l'article selon l'invention et pour les verres laqués noirs seuls, avec un noir profond et une luminance du blanc proche de 50 cd/m2. Un tel contraste est suffisant pour une bonne lecture des informations.

### 2. Angle de vue

L'angle de vue correspond à l'angle pour lequel le contraste atteint 4.5 :1 qui est le contraste minimal requis pour lire confortablement une information. Concrètement, quand l'angle d'observation augmente, la luminosité de l'image diminue. L'article Inv. 1 présente un angle de vue de l'écran de 125° (±62,5° / normale à l'écran).

### 3. Gain normalisé de l'écran

La variation de gain normalisé selon l'angle d'observation est calculée de la façon suivante :
- en valeur absolue (VA) : ΔG=|G_{3°}-G_{45°}|
- en pourcentage (P) : ΔG=|G_{3°}-G_{45°}|/G_{3°}*100
avec G_{3°} et G_{45°} respectivement gain à 3° et 45°.

| | Gain à 3° | Gain à 45° | ΔG | Réflexion diffuse homogène |
|---|---|---|---|---|
| Comp1 | 0,12 | 0,10 | VA : 0,02 | Oui |
| Comp2 | 9,1 | 0,2 | VA : 8,9 | non |
| | | | P: 98 % | |
| Inv1 | 8,8 | 0,3 | VA : 8,5 | non |
| | | | P: 97 % | |

Le gain de l'article Inv. 1 est de 8.8 et le gain de l'inv.2 est de 1,4.

Un gain supérieur à 1 à 0° signifie une luminosité accrue aux petits angles d'observation. Un niveau de gain élevé, comme celui mesuré pour l'article Inv.1, permet d'utiliser l'article comme écran dans un environnement éclairé en conservant une bonne qualité d'image qui apparait lumineuse et contrastée.

### IV. Visibilité des traces

La visibilité des traces de doigts à la surface d'un matériau ou article a été mesurée selon le protocole suivant.

La trace est déposée sur la surface à mesurer avec un dispositif comprenant un tampon encreur et dont le motif à imprimer est une empreinte digitale. On vient déposer sur le tampon une solution de sébum artificiel (corps gras + solution aqueuse) fournie par exemple par la société Essilor^{®}.

L'application du sébum sur le tampon puis la dépose de l'empreinte sont effectuées selon un protocole rigoureux de manière à obtenir une répétabilité maximale et une trace toujours identique.

La surface avec ou sans empreinte est éclairée avec un éclairage linéaire de LEDS blanches (éclairage directif). Une caméra filme la scène à la normale de la surface à mesure. Les positions relatives « surface à mesurer » / « éclairage » / « caméra » sont figées.

La quantification de la visibilité est déterminée de la façon suivante :
- Acquisition d'une image de la surface sans empreinte,
- Dépose de l'empreinte,
- Acquisition d'une image de la même surface avec empreinte,
- Extraction du contour de l'empreinte,
- Mesure de la luminosité L1 sur la surface extraite,
- Extraction de la même zone sur l'image sans trace et mesure de la luminosité L0,
- Expression du contraste = Visibilité trace% = 100 x (L1 - L0) / (L1+L0).

Une trace de doigts est déposée sur la surface à évaluer. Des images sont ensuite prises et analysées pour évaluer la visibilité des traces de doigts. On détermine alors une valeur de contraste. Un contraste élevé correspond à une grande visibilité.

Le contraste mesuré sur une trace de doigts est 9 fois plus faible avec l'article Inv. 1 (contraste = 5) qu'avec l'article comp. 1 correspondant au substrat laqué noir seul (contraste de 45). L'article selon l'invention permet bien de réduire considérablement la visibilité des traces de doigts.

### V. Autres fonctionnalités

Les photographies objets des figures 4B, 4C, 4D illustrent la fonctionnalité « tableau noir » pouvant être combinée à celle d'écran de projection :
- Figure B : crédence de cuisine,
- Figure C : tableau scolaire,
- Figure D : salle de réunion.

L'article présente un très bon rendu des couleurs et une bonne résolution. La résolution est principalement liée aux propriétés de la texture utilisée et notamment à la période typique des « grains » de cette texture (RSm = 132 µm + /- 50 µm).

### VI. Conclusion

L'article selon l'invention présente bien les avantages suivants :
- la luminance du blanc des images projetées est suffisamment élevée pour permettre d'obtenir un bon contraste et donc une bonne visualisation, peu importe le niveau d'éclairement de la pièce,
- la luminosité, le contraste (180:1), la résolution de l'image permettent une excellente lisibilité des informations projetées,
- le gain élevé permet d'obtenir des images lumineuses y compris dans un environnement éclairé,
- l'angle de vue reste compatible avec un grand nombre de situations de projection existantes,
- le rendu des couleurs est très bon,
- la visibilité des salissures est réduite.

L'article de couleur foncée ou noir selon l'invention utilisé comme écran de projection permet de combiner la projection d'image et l'utilisation comme tableau.

## Revendications

1. Article utilisé comme écran de projection comprenant deux éléments diffusants à réflexion diffuse distincts, sous forme de plans ou de plaques parallèles, qualifiés de premier et second éléments diffusants, **caractérisé en ce que** :
- le premier élément diffusant est translucide ou transparent, il comprend au moins une surface texturée et est choisi parmi
un substrat texturé ou
un élément en couches transparent à transmission spéculaire et réflexion diffuse, comprenant :
- deux couches externes transparentes (2, 4), ayant sensiblement le même indice de réfraction (n2, n4) et ayant chacune une surface principale externe lisse (2A, 4A), et
- une couche centrale (3) intercalée entre les couches externes (2, 4), la couche centrale (3) comportant au moins une couche transparente d'indice de réfraction (n3) différent de celui des couches externes ou une couche métallique,
où toutes les surfaces de contact (S₀, S₁, ..., Sₖ) entre deux couches adjacentes de l'élément en couches (1) où l'une des deux couches est une couche métallique, ou qui sont deux couches transparentes d'indices de réfraction différents, sont texturées et parallèles entre elles,
la pente quadratique moyenne Rdq du profil de la surface texturée est strictement supérieure à 0,2°,
- le second élément diffusant est de couleur foncée.

2. Article selon la revendication 1 **caractérisé en ce qu'**il présente une luminance du noir inférieure à 30 cd/m², de préférence inférieure à 20 cd/m², voire inférieure à 10 cd/m² mesurée dans un environnement éclairé à 350 LUX selon la direction de diffusion privilégiée, le spéculaire étant exclu, du côté du premier élément diffusant.

3. Article selon la revendication 1 ou 2 **caractérisé en ce qu'**il présente une luminance du blanc supérieure à 100 cd/m², de préférence supérieure à 200 cd/m², voir supérieure à 500 cd/m², mesurée dans un environnement éclairé à 350 LUX selon la direction de diffusion privilégiée, le spéculaire étant exclu, du côté du premier élément diffusant.

4. Article selon l'une quelconque des revendications précédentes **caractérisé en ce que** le second élément diffusant présente une réflexion diffuse homogène.

5. Article selon l'une quelconque des revendications précédentes **caractérisé en ce que** le premier élément diffusant présente une réflexion diffuse non homogène.

6. Article selon l'une quelconque des revendications précédentes **caractérisé en ce que** l'article présente des variations maximales de gain normalisé en fonction de l'angle d'observation, mesurées du côté du premier élément diffusant, entre 0° et 60° par rapport à la normale à l'écran :
- en valeurs absolues, supérieures à 0,2, voire supérieures à 0,5, voire supérieures à 1, voire supérieures à 5, et
- en pourcentages, supérieures à 30%, voire supérieures à 50 %, de préférence supérieures à 80 %, voire supérieures à 90 %.

7. Article selon la revendication 5 ou 6 **caractérisé en ce que** la réflexion lumineuse diffuse de l'article, mesurée du côté du premier élément diffusant, a au moins un maximum dans une direction distincte de la direction de réflexion spéculaire.

8. Article selon l'une quelconque des revendications précédentes **caractérisé en ce que** la pente quadratique moyenne Rdq du profil de la surface texturée est comprise entre 0,5° et 40°.

9. Article selon l'une quelconque des revendications précédentes **caractérisé en ce que** la pente quadratique moyenne Rdq du profil de la surface texturée est comprise entre 1,0 et 30°.

10. Article selon l'une quelconque des revendications précédentes **caractérisé en ce qu'**une couche externe de l'élément en couches est formée par un substrat texturé choisi parmi les polymères, les verres ou les céramiques comprenant au moins une surface texturée.

11. Article selon l'une quelconque des revendications précédentes **caractérisé en ce que** la couche centrale de l'élément en couches est obtenue par dépôt par pulvérisation cathodique d'une couche unique ou d'un empilement de couches.

12. Article selon l'une quelconque des revendications précédentes **caractérisé en ce que** le deuxième élément diffusant est un revêtement diffusant.

13. Article selon la revendication 12 **caractérisé en ce que** le revêtement diffusant est un revêtement opaque et absorbant choisi parmi les peintures minérales ou organiques et les émaux.

14. Article selon la revendication 12 ou 13 **caractérisé en ce que** le revêtement diffusant est déposé sur un substrat additionnel, le substrat additionnel et le premier élément diffusant sont solidarisés par feuilletage à l'aide d'une feuille en matière plastique.

15. Article selon l'une quelconque des revendications 12 ou 14 **caractérisé en ce que** le revêtement diffusant est déposé sur la face du substrat additionnel :
- la plus éloignée de l'élément en couches transparent ou
- la plus proche de l'élément en couches transparent.

16. Article selon l'une quelconque des revendications 12 à 15 **caractérisé en ce que** la feuille en matière plastique est une couche externe de l'élément en couches.

17. Système de projection comprenant un article utilisé comme écran de projection selon l'une quelconque des revendications 1 à 16 et un projecteur, l'article comprenant une face avant sur laquelle est projetée l'image et une face arrière **caractérisé en ce que** le second élément diffusant est séparé de la face avant au moins par le premier élément diffusant.

18. Procédé de projection en réflexion selon lequel on dispose d'un écran de projection fonctionnant en réflexion et d'un projecteur, ledit procédé consistant à projeter grâce au projecteur des images sur l'écran de projection, ledit écran de projection comprenant un article tel que défini dans l'une quelconque des revendications 1 à 16.

## Patentansprüche

1. Als Projektionsschirm verwendeter Artikel, umfassend zwei unterschiedliche streuende Elemente mit diffuser Reflexion in Form von parallelen Ebenen oder Platten, die als erstes und zweites streuendes Element bezeichnet werden, **dadurch gekennzeichnet, dass**:
- das erste streuende Element lichtdurchlässig oder transparent ist, mindestens eine texturierte Oberfläche aufweist und ausgewählt ist aus
einem texturierten Substrat oder
einem transparenten geschichteten Element mit spiegelnder Transmission und diffuser Reflexion, umfassend:
- zwei transparente äußere Schichten (2, 4) mit im Wesentlichen gleichem Brechungsindex (n2, n4) und jeweils mit einer glatten äußeren Hauptoberfläche (2A, 4A), und
- eine Kernschicht (3), die zwischen den äußeren Schichten (2, 4) angeordnet ist, wobei die Kernschicht (3) mindestens eine transparente Schicht mit einem Brechungsindex (n3), der sich von dem der äußeren Schichten unterscheidet, oder eine Metallschicht umfasst,
wobei alle Kontaktflächen (S₀, S₁, ..., Sₖ) zwischen zwei benachbarten Schichten des geschichteten Elements (1), bei denen eine der beiden Schichten eine Metallschicht ist oder bei denen es sich um zwei transparente Schichten mit unterschiedlichen Brechungsindizes handelt, texturiert und parallel zueinander sind,
die mittlere quadratische Neigung Rdq des Profils der texturierten Oberfläche zwingend größer als 0,2° ist,
- das zweite streuende Element eine dunkle Farbe hat.

2. Artikel nach Anspruch 1, **dadurch gekennzeichnet, dass** er eine schwarze Leuchtdichte von weniger als 30 cd/m², vorzugsweise weniger als 20 cd/m², sogar weniger als 10 cd/m² aufweist, gemessen in einer mit 350 LUX beleuchteten Umgebung entlang der bevorzugten Streuungsrichtung, Spiegelung ausgeschlossen, auf der Seite des ersten streuenden Elements.

3. Artikel nach Anspruch 1 oder 2, **dadurch gekennzeichnet, dass** er eine weiße Leuchtdichte von mehr als 100 cd/m², vorzugsweise mehr als 200 cd/m², sogar mehr als 500 cd/m² aufweist, gemessen in einer mit 350 LUX beleuchteten Umgebung entlang der bevorzugten Streuungsrichtung, Spiegelung ausgeschlossen, auf der Seite des ersten streuenden Elements.

4. Artikel nach einem der vorstehenden Ansprüche, **dadurch gekennzeichnet, dass** das zweite streuende Element eine homogene diffuse Reflexion aufweist.

5. Artikel nach einem der vorstehenden Ansprüche, **dadurch gekennzeichnet, dass** das erste streuende Element eine nicht homogene diffuse Reflexion aufweist.

6. Artikel nach einem der vorstehenden Ansprüche, **dadurch gekennzeichnet, dass** der Artikel maximale Schwankungen der normalisierten Verstärkung in Abhängigkeit des Betrachtungswinkels, gemessen auf der Seite des ersten streuenden Elements, zwischen 0° und 60° in Bezug zur Bildschirm-Normalen aufweist:
- in absoluten Werten mehr als 0,2, sogar mehr als 0,5, sogar mehr als 1, sogar mehr als 5, und
- in Prozent mehr als 30 %, sogar mehr als 50 %, vorzugsweise mehr als 80 %, sogar mehr als 90 %.

7. Artikel nach Anspruch 5 oder 6, **dadurch gekennzeichnet, dass** die diffuse Lichtreflexion des Artikels, gemessen auf der Seite des ersten streuenden Elements, mindestens ein Maximum in einer Richtung aufweist, die sich von der Richtung der spiegelnden Reflexion unterscheidet.

8. Artikel nach einem der vorstehenden Ansprüche, **dadurch gekennzeichnet, dass** die mittlere quadratische Neigung Rdq des Profils der texturierten Oberfläche zwischen 0,5° und 40° liegt.

9. Artikel nach einem der vorstehenden Ansprüche, **dadurch gekennzeichnet, dass** die mittlere quadratische Neigung Rdq des Profils der texturierten Oberfläche zwischen 1,0° und 30° liegt.

10. Artikel nach einem der vorstehenden Ansprüche, **dadurch gekennzeichnet, dass** eine äußere Schicht des geschichteten Elements durch ein texturiertes Substrat gebildet wird, das aus Polymeren, Gläsern oder Keramiken ausgewählt ist, die mindestens eine texturierte Oberfläche umfassen.

11. Artikel nach einem der vorstehenden Ansprüche, **dadurch gekennzeichnet, dass** die Kernschicht des geschichteten Elements mittels Abscheidung durch Kathodenzerstäubung einer einzelnen Schicht oder einer Stapelung von Schichten erhalten wird.

12. Artikel nach einem der vorstehenden Ansprüche, **dadurch gekennzeichnet, dass** das zweite streuende Element eine streuende Beschichtung ist.

13. Artikel nach Anspruch 12, **dadurch gekennzeichnet, dass** die streuende Beschichtung eine undurchsichtige und absorbierende Beschichtung ist, die aus mineralischen oder organischen Farben und Emaillen ausgewählt ist.

14. Artikel nach Anspruch 12 oder 13, **dadurch gekennzeichnet, dass** die streuende Beschichtung auf einem zusätzlichen Substrat abgeschieden ist, wobei das zusätzliche Substrat und das erste streuende Element durch Laminieren mittels einer Kunststofffolie fest verbunden sind.

15. Artikel nach einem der Ansprüche 12 oder 14, **dadurch gekennzeichnet, dass** die streuende Beschichtung auf der Fläche des zusätzlichen Substrats abgeschieden wird:
- die am weitesten von dem transparenten geschichteten Element entfernt ist oder
- die dem transparenten geschichteten Element am nächsten liegt.

16. Artikel nach einem der Ansprüche 12 bis 15, **dadurch gekennzeichnet, dass** die Kunststofffolie eine äußere Schicht des geschichteten Elements ist.

17. Projektionssystem mit einem als Projektionsschirm verwendeten Artikel nach einem der Ansprüche 1 bis 16 und einem Projektor, wobei der Artikel eine vordere Fläche, auf die das Bild projiziert wird, und eine rückseitige Fläche aufweist, **dadurch gekennzeichnet, dass** das zweite streuende Element mindestens durch das erste streuende Element von der vorderen Fläche getrennt ist.

18. Verfahren zur Projektion mittels Reflexion, bei dem ein mit Reflexion arbeitender Projektionsschirm und ein Projektor zur Verfügung stehen, wobei das Verfahren darin besteht, mithilfe des Projektors Bilder auf den Projektionsschirm zu projizieren, wobei der Projektionsschirm einen Artikel umfasst, wie er in einem der Ansprüche 1 bis 16 definiert ist.

## Claims

1. An article used as front-projection screen comprising two distinct diffusely reflecting scattering elements, taking the form of parallel sheets or planes, qualified first and second scattering elements, **characterized in that**:
- the first scattering element is translucent or transparent, it comprises at least one textured surface and is chosen from
a textured substrate or
a specularly transmitting and diffusely reflecting transparent layered element comprising:
- two transparent external layers (2, 4) having substantially the same refractive index (n2, n4) and each having a smooth external main surface (2A, 4A), and
- a central layer (3) intermediate between the external layers (2, 4), the central layer (3) comprising at least one transparent layer of refractive index (n3) different from that of the external layers or a metal layer,
all the contact surfaces (S₀, S₁, ..., Sₖ) between two adjacent layers of the layered element (1), one of the two layers of which is a metal layer, or that are two transparent layers of different refractive indices, being textured and parallel to one another,
the root-mean-square slope Rdq of the profile of the textured surface is strictly higher than 0.2°,
- the second scattering element is of dark color.

2. The article as claimed in claim 1, **characterized in that** it has a black luminance lower than 30 cd/m², preferably lower than 20 cd/m², or even lower than 10 cd/m² measured in an environment illuminated to 350 LUX in the privileged scattering direction, the specular being excluded, on the side of the first scattering element.

3. The article as claimed in claim 1 or 2, **characterized in that** it has a white luminance higher than 100 cd/m², preferably higher than 200 cd/m², or even higher than 500 cd/m², measured in an environment illuminated to 350 LUX in the privileged scattering direction, the specular being excluded, on the side of the first scattering element.

4. The article as claimed in any one of the preceding claims, **characterized in that** the second scattering element has a uniform diffuse reflection.

5. The article as claimed in any one of the preceding claims, **characterized in that** the first scattering element has a nonuniform diffuse reflection.

6. The article as claimed in any one of the preceding claims, **characterized in that** the article has maximum variations in normalized gain as a function of angle of observation, measured on the side of the first scattering element, between 0° and 60° with respect to the normal to the screen, that are:
- in absolute value, larger than 0.2, or even larger than 0.5, or even larger than 1, or even larger than 5, and
- in percent, larger than 30%, or even larger than 50%, preferably larger than 80% or even larger than 90%.

7. The article as claimed in claim 5 or 6, **characterized in that** the diffuse luminous reflection of the article, measured on the side of the first scattering element, has at least one maximum in a direction distinct from the direction of specular reflection.

8. The article as claimed in any one of the preceding claims, **characterized in that** the root-mean-square slope Rdq of the profile of the textured surface is comprised between 0.5°and 40°.

9. The article as claimed in any one of the preceding claims, **characterized in that** the root-mean-square slope Rdq of the profile of the textured surface is comprised between 1.0°and 30°.

10. The article as claimed in claim 1, **characterized in that** an external layer of the layered element is formed by a textured substrate chosen from polymers, glasses or ceramics comprising at least one textured surface.

11. The article as claimed in any one of the preceding claims, **characterized in that** the central layer of the layered element is obtained by depositing, by cathode sputtering, a single layer or a stack of layers.

12. The article as claimed in any one of the preceding claims, **characterized in that** the second scattering element is a scattering coating.

13. The article as claimed in claim 12, **characterized in that** the scattering coating is an opaque and absorbent coating chosen from mineral or organic paints and enamels.

14. The article as claimed in claim 12 or 13, **characterized in that** the scattering coating is deposited on an additional substrate, and the additional substrate and the first scattering element are securely fastened by lamination using a sheet made of plastic material.

15. The article as claimed in either one of claims 12 and 14, **characterized in that** the scattering coating is deposited on the face of the additional substrate that is:
- furthest from the transparent layered element or
- closest to the transparent layered element.

16. The article as claimed in any one of claims 12 to 15, **characterized in that** the sheet made of plastic material is an external layer of the layered element.

17. A front-projection system comprising an article used as front-projection screen as claimed in any one of claims 1 to 16 and a projector, the article comprising a front face onto which is projected the image and a back face **characterized in that** the second scattering element is separated from the front face at least by the first scattering element.

18. A reflective front-projection method wherein a front-projection screen operating in reflection and a projector are provided, said method consisting in projecting by virtue of the projector images onto the front-projection screen, said front-projection screen comprising an article such as defined in any one of claims 1 to 16.
